# EUROPEAN PATENT APPLICATION

(11) **EP 3 364 614 A1**
(43) Date of publication of application: **22.08.2018**
(21) Application number: 16799388.0
(22) Date of filing: 20.06.2016
(51) Int. Cl.: H04L 12/771

(54) **METHOD FOR IMPLEMENTING BIT INDEX EXPLICIT REPLICATION AND BIT-FORWARDING ROUTER**

(30) Priority: 12.10.2015 CN 201510658730
(71) Applicant: ZTE Corporation, Shenzhen, Guangdong 518057 (CN)
(72) Inventor: WANG, Cui, Shenzhen, Guangdong 518057 (CN); ZHANG, Zheng, Shenzhen, Guangdong 518057 (CN); HU, Fangwei, Shenzhen, Guangdong 518057 (CN); HUANG, Sunliang, Shenzhen, Guangdong 518057 (CN)
(74) Representative: Aipex B.V.
(86) International application number: PCT/CN2016/086462
(87) International publication number: WO 2016/188501

(57) **Abstract**

Provided are a method for implementing multicast and a Bit-Forwarding Router. The method includes acquiring Bit Index Explicit Replication (BIER)-related BitStringLength information on a present node; encapsulating BIER-related information including the BitStringLength information in a same type-length-value (TLV) field of BIER information; and notifying of the TLV of the BIER information through a routing protocol.

## Description

### TECHNICAL FIELD

The present invention relates to, but is not limited to, IP multicast technologies and, in particular, relates to a method for implementing multicast and a Bit-Forwarding Router.

### BACKGROUND

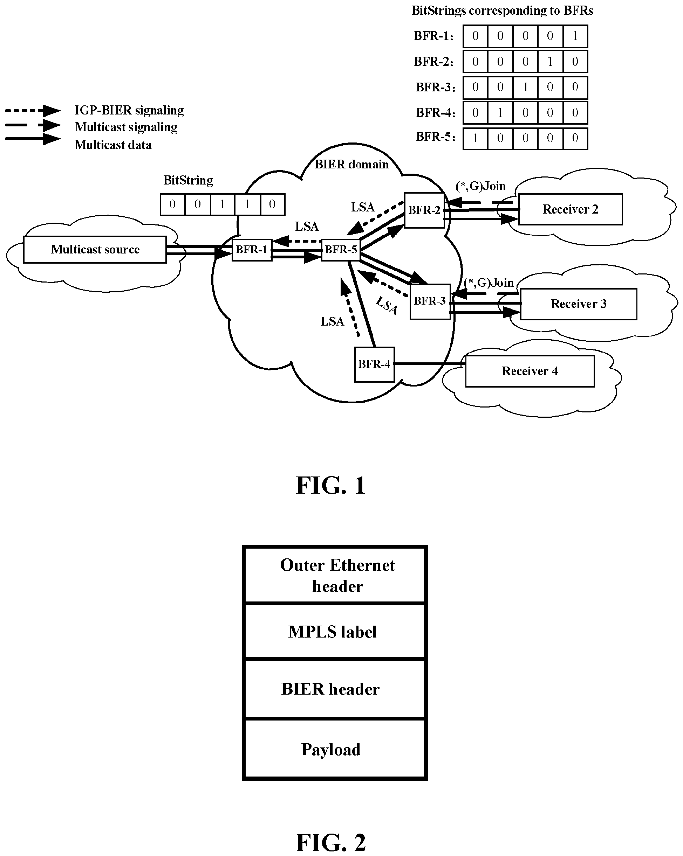

The Bit Index Explicit Replication (BIER) technology is a multicast technology developed by the Internet Engineering Task Force (IETF) in recent years. As shown in FIG. 1, the basic principle of the BIER technology is as follows. Each node in a BIER domain is allocated a unique Bit-Forwarding Router Identifier (BFR-id) and each bit in a BitString corresponds to one BFR-id. For example, a BitString for BFR-1 with a BFR-id of 1 is 00001, a BitString for BFR-2 with a BFR-id of 2 is 00010, and so on. When a multicast message reaches BFR-1, BFR-1 serves as a Bit-Forwarding Ingress Router (BFIR) and determines in some way which Bit-Forwarding Egress Routers (BFERs) need this multicast traffic. For example, if BFR-2 and BFR-3 need the multicast traffic, the BFR-ids corresponding to the BFERs that need the multicast traffic are combined into a BitString 00110 and encapsulated in a BIER header, and then a multicast data message in which the BIER header is encapsulated is forwarded according to a Bit Index Forwarding Table (BIFT) generated by Interior Gateway Protocol (IGP). The multicast data message is forwarded through BFR-5 with a BFR-id of 5. The BFR-5 can also be connected to BFR-4. BFR-2, BFR-3 and BFR-4 interacting with receiver 2, receiver 3 and receiver 4, respectively.

Basic concepts in the BIER technology are described below.

Sub-domain: Sub-domains are used to form different BIER topologies that can correspond to multiple topologies of Open Shortest Path First (OSPF)/Intermediate System-to-Intermediate System (ISIS). Each BIER domain may contain multiple sub-domains. Each sub-domain is identified by a sub-domain-id. Each sub-domain-id has a value range from 0 to 255 and has a length of 8 bits.

BFR-prefix: The address of each BFR node, which may be an IPv4 address or an IPv6 address. The address of each BFR is unique in one BIER domain and is equivalent to a router identifier (Router-id). A BFR-prefix is generally a loopback address of a BFR device.

Bit-Forwarding Router Identifier (BFR-id): A BFR-id is a natural number and indicates ID information allocated to each BFR. A same BFR can be allocated different BFR-ids in different sub-domains. Each BFR-id has a value range from 1 to 65535 and has a length of 16 bits. In general, the BFR-id is identified in the format of <SI:XYZW>, where SI is Set Identifier and will be described below. XYZW is a BitString, and obviously, the BitStringLength is 4 in this format.

BitStringLength (BSL): A BSL is the length of a BitString in forwarding according to the BIER technology. The BSL is at least 64 bits. The BSL may also be 128, 256, 512, 1024 or 2048 bits. The BSL is at most 4096 bits. The BSL may be identified using 4 bits in a message. For example, when the BSL is 64 bits, the BSL is identified by 0001 in the message; when the BSL is 128 bits, the BSL is identified by 0010 in the message; when the BSL is 256 bits, the BSL is identified by 0011 in the message; when the BSL is 512 bits, the BSL is identified by 0100 in the message; when the BSL is 1024 bits, the BSL is identified by 0101 in the message; when the BSL is 2048 bits, the BSL is identified by 0110 in the message; and when the BSL is 4096 bits, the BSL is identified by 0111 in the message.

Set Identifier (SI): When a used BSL is not long enough to include BFR-ids of all nodes in one sub-domain (e.g., when the sub-domain contains 10 nodes but the BSL is only 4 bits), the nodes need to be classified into different layers and each layer is identified by a different SI. The sense of sub-domain is superordinate to the sense of SI.

The relationship among BFR-id, BSL and SI is as follows: SI = (BFR-id - 1)/BSL. BP = (BFR-id - 1) modulo (BSL) + 1. BP is the acronym of Bit Position and identifies a BitString format in which the BFR-id belongs to the corresponding Set. For example, when a domain contains 10 nodes and BSL is 4, it is calculated that SI = (10 - 1)/BSL= 2 and BP = (BFR-id - 1) modulo (BSL) + 1 = 2. BP = 2 indicates that the second position of the BitString is 1 in this case. Therefore, in this case, a BFR with a BFR-id of 10 is identified by <10:0010> in the format of <SI:XYZW>. Similarly, a BFR with a BFR-id of 8 is identified by <01:1000> in the format of <SI:XYZW>.

Label: When BIER encapsulation is Multi-Protocol Label Switching (MPLS) encapsulation, not only a BIER header is encapsulated, but a label header is also encapsulated outside the BIER header. The label is allocated to each BFR and has a local meaning. The label is not allocated for Forwarding Equivalence Class (FEC) but allocated for a triad <sub-domain/BSL/SI> of each BFR. When any one of the elements is different, the allocated label is different. Further, each BFR device notifies of the label information through IGP. Then each BFR along the way forms a label forwarding table according to each <sub-domain/BSL/SI>. When the sub-domain-id is the same as the BSL, the IGP can allocate multiple labels to different SIs at one time. The definition of this label is different from the definition of a traditional MPLS label. This label is notified together with BIER basic information through IGP, instead of being notified through Border Gateway Protocol (BGP) or MPLS protocol. When data-plane encapsulation is performed for a multicast message, if MPLS encapsulation is supported, it is needed to establish a mapping between the sub-domain/BSL/SI and the label on a BFIR. After the mapping is established, it is not necessary to encapsulate sub-domain/BSL/SI information in the BIER header, and it is needed to encapsulate only the label header and basic BIER header. The format of the encapsulated header, as shown in FIG. 2, includes an outer Ethernet header, an MPLS label, a BIER header and a payload. An intermediate node searches for the label and obtains information of corresponding sub-domain/BSL/SI and BFR-id, which is used as the index for searching the corresponding BIFT. Then the information on a next hop in a matching forwarding table entry in the BIFT is searched out according to the value of BitString. Then the label header and the BIER header are re-encapsulated and the message is forwarded to the next hop.

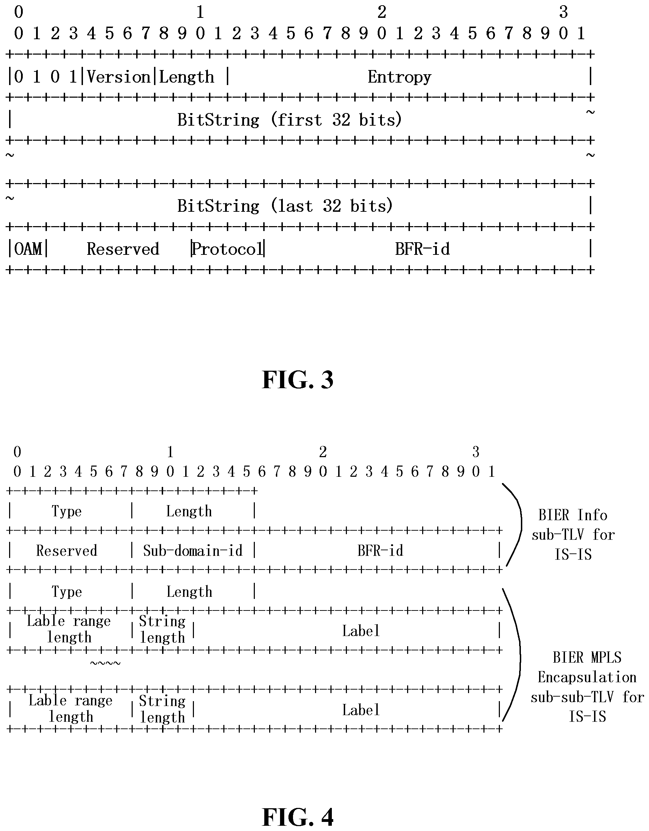

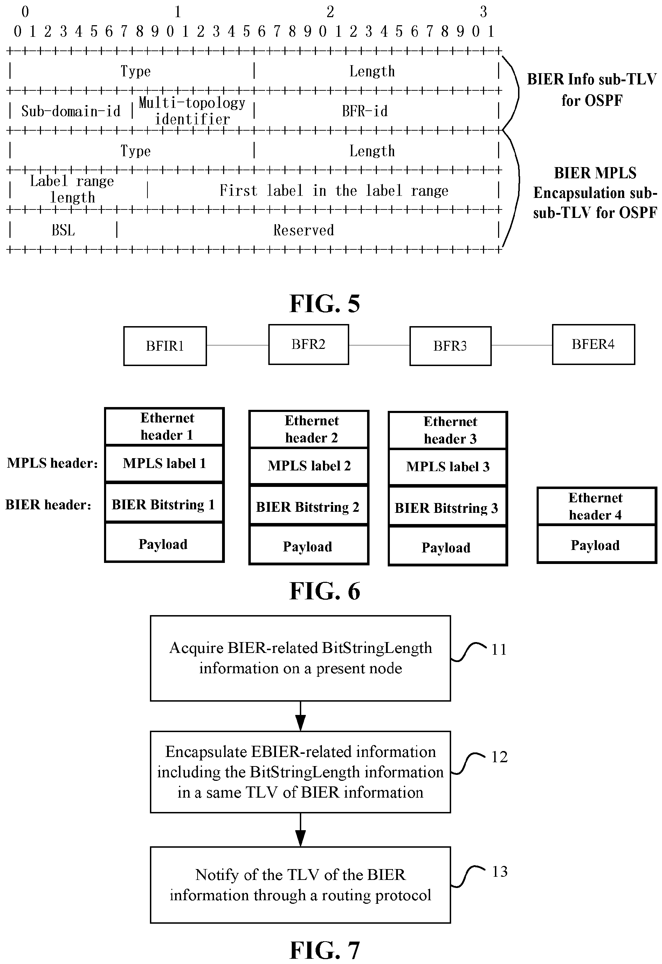

As mentioned above, BIFT is extended based on IGP. Existing IGPs supporting extension include the IS-IS protocol and the OSPF protocol. As shown in FIG. 4, the IS-IS protocol is extended to IS-IS LSA that supports the BIER technology. As shown in FIG. 5, the OSPF protocol is extended to OSPF LSA that supports the BIER technology. Here LSA is short for Link-State Advertisement. It can be seen that BIER info sub-TLV carried in the protocol extension includes sub-domain-id and BFR-id, and BIER MPLS Encapsulation sub-sub-TLV carried in the protocol extension includes BSL, together with one of label value and label range. Here TLV is short for type-length-value.

It can be seen that the BIER MPLS encapsulation does not mean that the label layer supports BGP, MPLS or other label distribution protocols, and just mean that the concept of labels is used and distribution, notification, forwarding and other various capabilities of labels are used in a scenario where BGP/MPLS label distribution protocols are not supported. This application brings certain advantages in a multicast network having complex multi-topology, multiple sub-domains and multiple sets. For example, the efficiency of table lookup of the network is improved, because matching of a single label element is easier than matching of the triad <sub-domain-id, BSL, Set Identifier>. However, the introduction of the label concept brings complexity to the control plane and also adds MPLS-level forwarding to the forwarding plane. For a simple multicast application scenario such as Internet Protocol Television (IPTV), the multicast source is relatively fixed and the egress router of the multicast domain is also relatively fixed. In this scenario, there is no need to use complex MPLS as the forwarding technology of the control plane and the data plane.

### SUMMARY

The following is a summary of a subject matter described herein in detail. This summary is not intended to limit the scope of the claims.

Embodiments of the present invention provide a method for implementing multicast and a Bit-Forwarding Router, which can reduce support of MPLS control plane and data plane in a BIER domain.

The solution provided by embodiments of the present invention is described below.

A method for implementing BIER, which is applied to a Bit-Forwarding Router in a BIER domain, includes:
acquiring BIER-related BitStringLength information on a present node;
encapsulating BIER-related information including the BitStringLength information in a same TLV of BIER information; and
notifying of the TLV of the BIER information through a routing protocol.

Optionally, the BitStringLength information includes at least one BitStringLength.

Optionally, the BIER-related information further includes Sub-domain Identifier information, Set Identifier information and an identifier of the Bit-Forwarding Router.

Optionally, the BIER-related information further includes multi-topology identifier information.

Optionally, the TLV of the BIER information further includes a label identifier, and a case where the label identifier is set indicates that a BIER MPLS Encapsulation sub-TLV is compatible and used; and a case where the label identifier is not set indicates that the BIER MPLS Encapsulation sub-TLV is not used.

Optionally, the routing protocol includes any one of the following protocols:

Intermediate System-to-intermediate System, Open Shortest Path First, and Border Gateway Protocol.

Optionally, the routing protocol supports an IPv4 network protocol and/or an IPv6 network protocol.

A Bit-Forwarding Router includes:
an acquisition module, which is configured to acquire BIER-related BitStringLength information on a present node;
an encapsulation module, which is configured to encapsulate BIER-related information including the BitStringLength information in a same type-length-value (TLV) of BIER information; and
a notification module, which is configured to notify of the TLV of the BIER information through a routing protocol.

Optionally, the BitStringLength information acquired by the acquisition module includes at least one BitStringLength.

Optionally, the BIER-related information further includes Sub-domain Identifier information, Set Identifier information and an identifier of the Bit-Forwarding Router.

Optionally, the TLV of the BIER information encapsulated by the encapsulation module further includes a label identifier, and a case where the label identifier is set indicates that a BIER MPLS Encapsulation sub-TLV is compatible and used; and a case where the label identifier is not set indicates that the BIER MPLS Encapsulation sub-TLV is not used.

A method for implementing Bit Index Explicit Replication (BIER), which is applied to a Bit-Forwarding Router in a BIER domain, includes:
receiving BIER information, where BIER-related information including BitStringLength information is encapsulated in a same TLV of the BIER information; and
processing the BIER information.

Optionally, the BitStringLength information includes at least one BitStringLength.

Optionally, the BIER-related information further includes:

Sub-domain Identifier information, Set Identifier information, and an identifier of the Bit-Forwarding Router sending the BIER information.

Optionally, the BIER-related information further includes multi-topology identifier information.

Optionally, the method further includes receiving a Broadcast-Unkown-Multicast (BUM) message, encapsulating the BIER-related information in a BIER header of the BUM message, and forwarding the BUM message according to a BIER forwarding rule.

Optionally, the processing the BIER information includes:

parsing a label identifier in the TLV of the BIER information, where a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.

A Bit-Forwarding Router includes:
a receiving module, which is configured to receive BIER information, where BIER-related information including BitStringLength information is encapsulated in a same TLV of the BIER information; and
a processing module, which is configured to process the BIER information.

Optionally, the BitStringLength information received by the receiving module includes at least one BitStringLength.

Optionally, the BIER-related information received by the receiving module further includes Sub-domain Identifier information, Set Identifier information, and an identifier of a Bit-Forwarding Router sending the BIER information.

Optionally, the Bit-Forwarding Router further includes:
a forwarding module, which is configured to receive a BUM message, encapsulate the BIER-related information in a BIER message header of the BUM message, and forward the BUM message according to a BIER forwarding rule.

Optionally, the processing module processes the BIER information as follows: the processing module parses a label identifier included in the TLV of the BIER information, where a case where the label identifier is set indicates that a BIER MPLS Encapsulation sub-TLV is compatible and used; and a case where the label identifier is not set indicates that the BIER MPLS Encapsulation sub-TLV is not used.

A computer-readable storage medium is configured to store computer-executable instructions for executing the above method.

Embodiments of the present invention provide a method for implementing multicast and a Bit-Forwarding Router, which implement BIER in a non-MPLS network through the BIER technology and thus can reduce support of MPLS control plane and data plane in a BIER domain.

Other aspects can be understood after the accompanying drawings and detailed description are read and understood.

### BRIEF DESCRIPTION OF DRAWINGS

FIG. 1 is a schematic diagram of a BIER technology architecture in the related art.
FIG. 2 is a schematic diagram of a data plane in BIER-MPLS encapsulation in the related art.
FIG. 3 is a schematic diagram of a BIER header in BIER-MPLS encapsulation in the related art.
FIG. 4 is a schematic diagram of implementing a BIER control plane by IS-IS protocol extension in the related art.
FIG. 5 is a schematic diagram of implementing a BIER control plane by OSPF protocol extension in the related art.
FIG. 6 is a schematic diagram of a principle of BIER-MPLS forwarding in the related art.
FIG. 7 is a flowchart of a method for implementing multicast on a sending side according to an embodiment of the present invention.
FIG. 8 is a schematic diagram of a Bit-Forwarding Router on a sending side according to an embodiment of the present invention.
FIG. 9 is a flowchart of a method for implementing multicast on a receiving side according to an embodiment of the present invention.
FIG. 10 is a schematic diagram of a Bit-Forwarding Router on a receiving side according to an embodiment of the present invention.
FIG. 11 is a schematic diagram of reference format 1 of BIER information for IS-IS according to embodiment 1 of the present invention.
FIG. 12 is a schematic diagram of reference format 2 of BIER information for IS-IS according to embodiment 1 of the present invention.
FIG. 13 is a schematic diagram of a reference format of BIER information for OSPF according to embodiment 2 of the present invention.
FIG. 14 is a schematic diagram of a reference format of BIER information for BGP according to embodiment 4 of the present invention.
FIG. 15 is a schematic diagram of a reference format of a BIER header according to embodiment 5 of the present invention.
FIG. 16 is a schematic diagram of BIER forwarding according to embodiment 5 of the present invention.

### DETAILED DESCRIPTION

If not in collision, the embodiments described herein and the features thereof may be combined with each other.

Embodiments of the present invention attempt to introduce a simplified version of the BIER technology that does not need to support labels, so as to forward multicast traffic in an IP network. The principle of BIER-MPLS forwarding in the related art is shown in FIG. 6 and described later.

FIG. 7 is a flowchart of a method for implementing BIER on a sending side according to an embodiment of the present invention. As shown in FIG. 7, the method of this embodiment includes steps 11 to 13.

In step 11, BIER-related BitStringLength information on a present node (i.e., a node implementing this method) is acquired.

In step 12, BIER-related information including the BitStringLength information is encapsulated in a same TLV of BIER information.

In step 13, the BIER information is notified through a routing protocol.

Optionally, the BitStringLength information includes at least one BitStringLength.

Optionally, the BIER-related information further includes at least one of Sub-domain Identifier information, Set Identifier information, an identifier of the Bit-Forwarding Router and multi-topology identifier information.

Optionally, the TLV of the BIER information further includes a label identifier, and a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.

Optionally, the routing protocol includes any one of the following protocols: Intermediate System-to-Intermediate System (IS-IS), Open Shortest Path First (OSPF), and Border Gateway Protocol (BGP).

Optionally, the routing protocol supports an IPv4 network protocol and/or an IPv6 network protocol.

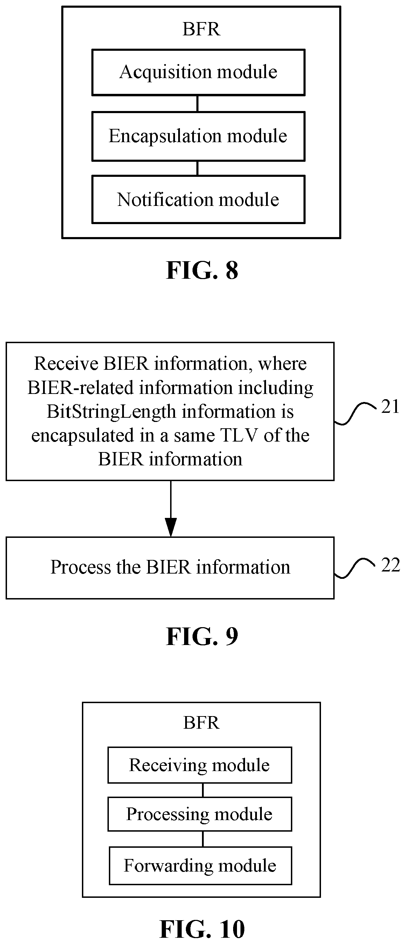

FIG. 8 is a schematic diagram of a Bit-Forwarding Router on a sending side according to an embodiment of the present invention. As shown in FIG. 8, the Bit-Forwarding Router of this embodiment includes:

an acquisition module, which is configured to acquire BIER-related BitStringLength information on a present node (i.e., the present router);

an encapsulation module, which is configured to encapsulate BIER-related information including the BitStringLength information in a same TLV of BIER information; and

a notification module, which is configured to notify of the BIER information through a routing protocol.

Optionally, the BitStringLength information includes at least one BitStringLength.

Optionally, the TLV of the BIER information encapsulated by the encapsulation module further includes a label identifier, and a case where the label identifier is set indicates that a BIER MPLS Encapsulation sub-TLV is compatible and used; and a case where the label identifier is not set indicates that the BIER MPLS Encapsulation sub-TLV is not used.

FIG. 9 is a flowchart of a method for implementing BIER on a receiving side according to an embodiment of the present invention. As shown in FIG. 9, the method of this embodiment includes steps 21 and 22.

In step 21, BIER information is received, where BIER-related information including BitStringLength information is encapsulated in a same TLV of the BIER information.

In step 22, the BIER information is processed.

Optionally, the BitStringLength information includes at least one BitStringLength.

Optionally, the BIER-related information further includes:

Sub-domain Identifier information, Set Identifier information, an identifier of the Bit-Forwarding Router sending the BIER information, and multi-topology identifier information.

In an optional embodiment, the method further includes:

receiving a Broadcast-Unkown-Multicast (BUM) message, encapsulating the BIER-related information in a BIER header of the BUM message, and forwarding the BUM message according to a BIER forwarding rule.

Optionally, in step 22, the processing the BIER information includes:
parsing a label identifier in the TLV of the BIER information, where a case where the label identifier is set indicates that a BIER MPLS Encapsulation sub-TLV is compatible and used; and a case where the label identifier is not set indicates that the BIER MPLS Encapsulation sub-TLV is not used.

FIG. 10 is a schematic diagram of a Bit-Forwarding Router on a receiving side according to an embodiment of the present invention. As shown in FIG. 10, the Bit-Forwarding Router of this embodiment includes:
a receiving module, which is configured to receive BIER information, where BIER-related information including BitStringLength information is encapsulated in a same TLV of the BIER information; and
a processing module, which is configured to process the BIER information.

Optionally, the BitStringLength information received by the receiving module includes at least one BitStringLength.

Optionally, the processing module processes the BIER information as follows: the processing module parses a label identifier included in the TLV of the BIER information, where a case where the label identifier is set indicates that a MPLS Encapsulation sub-TLV is compatible and used; and a case where the label identifier is not set indicates that the BIER MPLS Encapsulation sub-TLV is not used.

In an optional embodiment, the Bit-Forwarding Router further includes:
a forwarding module, which is configured to receive a Broadcast-Unkown-Multicast (BUM) message, encapsulate the BIER-related information in a BIER header of the BUM message, and forward the BUM message according to a BIER forwarding rule.

The following describes the solution in conjunction with embodiments. As shown in FIG. 6, according to the principle of BIER-MPLS forwarding in the related art, when a BFIR (i.e., BFR1) node receives a multicast message, MPLS header and BIER header are encapsulated in the message, and then the message is forwarded to BFR2. After receiving the message, BFR2 searches a label forwarding table for label information and BIFT information according to a label, and meanwhile, parses a triad <sub-domain/BSL/SI> corresponding to the label according to the label, and then searches BIFT in conjunction with BitString information in the BIER header. After information about a next-hop neighbor is found out, new MPLS header and BIER header distributed by the next-hop neighbor are encapsulated in the message to update original MPLS header and BIER header and then the message is forwarded. The rest are done in the same manner. Similarly, BFR3 updates MPLS header and BIER header and forwards the message to BFER4. BFER4 parses information about the triad <sub-domain/BSL/SI> according to label information, removes MPLS header and BIER header, and forwards the message out of the BIER domain. The MPLS header generally includes an MPLS Label.

After BIER is deployed using the technology of embodiments of the present invention, forwarding between multiple BFRs no longer depends on the MPLS label and is performed just according to the BIER header. This simplifies a network processing flow. The technology of embodiments of the present invention is applicable to a scenario where the BIER technology is deployed in a simple network that does not need to support an MPLS label.

### Embodiment 1:

Currently, when IS-IS protocol extension implements a BIER control plane, for an IPv4 network, extension is performed under Extended IP reachability TLV (TLV type is 135) and Multi-Topology Reachable IPv4 Prefixes TLV (TLV type is 235) of IS-IS; and for an IPv6 network, extension is performed under IPv6 Reachability TLV (TLV type is 236) and Multi-Topology Reachable IPv6 Prefixes TLV (TLV type is 237) of IS-IS. The extension format is shown in FIG. 4.

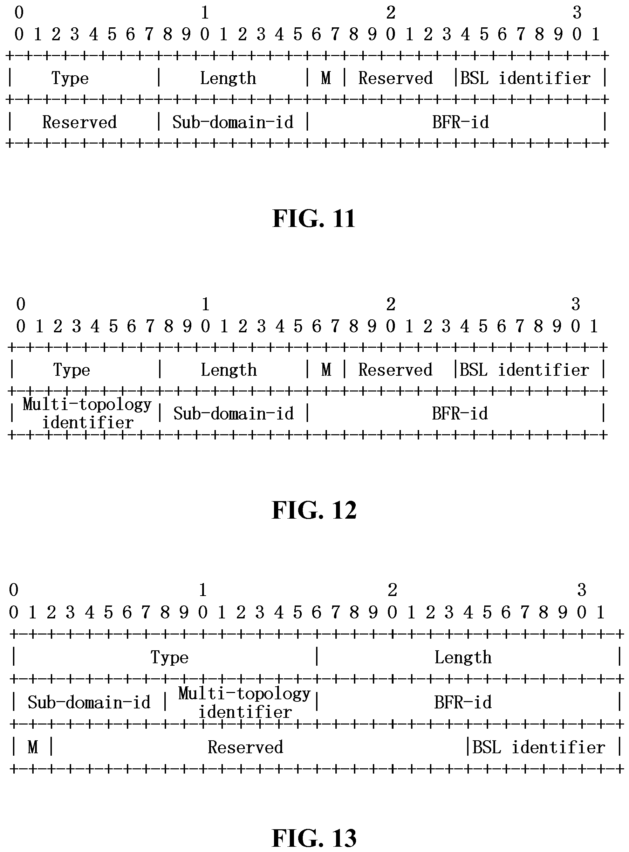

This embodiment of the present invention attempts to reduce support of MPLS control plane and data plane in a BIER domain and use only a BIER header to implement data-plane forwarding. Therefore, IS-IS BIER Info sub-TLV defined in FIG. 4 is modified. The reference format of BIER Info sub-TLV for IS-IS is shown in FIG. 11 or FIG. 12.

On the basis of the format of BIER Info sub-TLV for IS-IS in the related art (as shown in FIG. 4), two new fields may be defined. Alternatively, a new BIER Info sub-TLV may be defined. In addition to information carried in BIER Info sub-TLV in the related art, two new fields are also defined. One is an M field indicating whether to use MPLS-BIER, i.e., whether it is needed to carry BIER MPLS Encapsulation sub-sub-TLV. A case where the M field is set to 1 indicates that MPLS-BIER is used, i.e., carried BIER MPLS Encapsulation sub-sub-TLV is compatible and used. A case where the M field is set to 0 indicates that MPLS-BIER is not used, i.e., BIER MPLS Encapsulation sub-sub-TLV is not carried or used and a BIER header is used for forwarding. Another important field is the BSL Identifier field, which identifies at least one BitStringLength. This field is valid when the M field is 0. When the M field is 1, it is determined, according to a rule, whether this field is valid or the BitStringLength information field carried in BIER MPLS Encapsulation sub-sub-TLV is valid at this time. In this way, when BIER information is forwarded, it is not necessary to rely on MPLS for forwarding.

The BSL Identifier field can be implemented by the following reference formats, where each bit identifies one BSL. For example:
00000001 indicates that BSL is 64 bits;
00000010 indicates that BSL is 128 bits;
00000100 indicates that BSL is 215 bits;
00001000 indicates that BSL is 512 bits;
00010000 indicates that BSL is 1024 bits;
00100000 indicates that BSL is 2048 bits;
01000000 indicates that BSL is 4096 bits.

If two bits in a BSL Identifier are set (e.g., 01000001), the currently supported BSLs are 64 bits and 4096 bits. If three bits in a BSL Identifier are set (e.g., 00011100), the currently supported BSLs are 1024 bits, 512 bits and 256 bits.

### Embodiment 2:

When OSPF protocol extension implements a BIER control plane in the related art, for an IPv4 network, extension is performed under Extended Prefix TLV of OSPFv2; and for an IPv6 network, extension is performed under Extended LSATLV of OSPFv3. The extension format is shown in FIG. 5.

This embodiment of the present invention attempts to reduce support of MPLS control plane and data plane in a BIER domain and use only a BIER header to implement data-plane forwarding. Therefore, BIER Info sub-TLV for OSPF defined in FIG. 5 is modified. The reference format of BIER Info sub-TLV for OSPF is shown in FIG. 11, FIG. 12 or FIG. 13.

On the basis of the format of BIER Info sub-TLV for OSPF in the related art (as shown in FIG. 5), two new fields may be defined. Alternatively, a new BIER Info sub-TLV may be defined. In addition to information carried in BIER Info sub-TLV in the related art, two new fields are also defined. One is an M field indicating whether to use MPLS-BIER, i.e., whether it is needed to carry BIER MPLS Encapsulation sub-sub-TLV. A case where the M field is set to 1 indicates that MPLS-BIER is used, i.e., carried BIER MPLS Encapsulation sub-sub-TLV is compatible and used. A case where the M field is set to 0 indicates that MPLS-BIER is not used, i.e., BIER MPLS Encapsulation sub-sub-TLV is not carried or used. Another important field is the BSL Identifier field, which identifies at least one BitStringLength. This field is valid when the M field is 0. When the M field is 1, it is determined, according to a rule, whether this field is valid or the BitStringLength information field carried in BIER MPLS Encapsulation sub-sub-TLV is valid at this time.

### Embodiment 3:

OSPF supports establishment of OSPF virtual links on BFIR and BFER devices in a BIER domain. The extended TLV information mentioned in embodiments of the present invention is directly transmitted to an edge device in the BIER domain through the virtual links. BIER information is exchanged directed between the BFIR and BFER devices, reducing information storage of intermediate nodes in the BIER domain. The notified format is still the reference format of BIER Info for OSPF shown in FIG. 11, FIG. 12 or FIG. 13.

On the basis of the format of BIER Info sub-TLV for OSPF in the related art (as shown in FIG. 5), two new fields may be defined. Alternatively, a new BIER Info sub-TLV may be defined. In addition to carrying information carried in BIER Info sub-TLV in the related art, two new fields are also defined. One is an M field indicating whether to use MPLS-BIER, i.e., whether it is needed to carry BIER MPLS Encapsulation sub-sub-TLV. A case where the M field is set to 1 indicates that MPLS-BIER is used, i.e., carried BIER MPLS Encapsulation sub-sub-TLV is compatible and used. A case where the M field is set to 0 indicates that MPLS-BIER is not used, i.e., BIER MPLS Encapsulation sub-sub-TLV is not carried or used and a BIER header is used for forwarding. Another important field is the BSL Identifier field, which identifies at least one BitStringLength. This field is valid when the M field is 0. When the M field is 1, it is determined, according to a rule, whether this field is valid or the BitStringLength information field carried in BIER MPLS Encapsulation sub-sub-TLV is valid at this time.

### Embodiment 4:

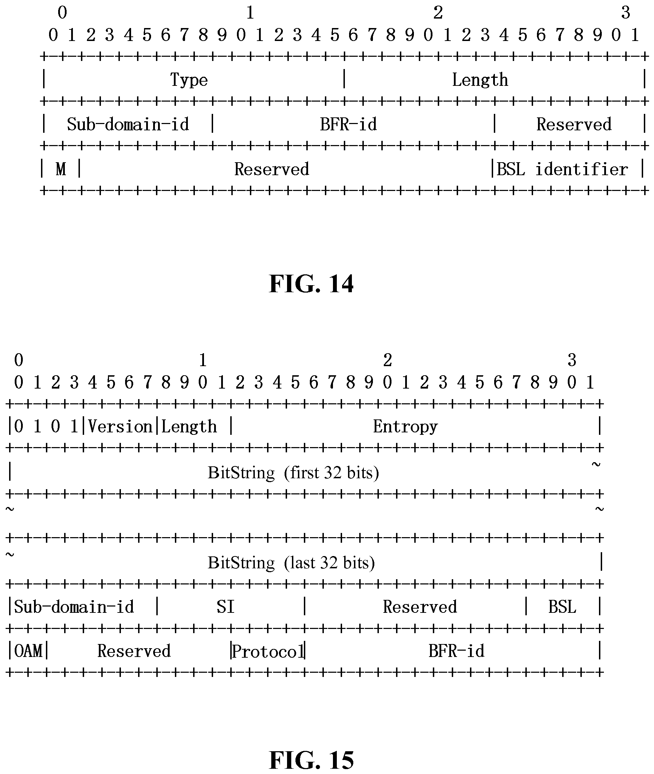

BGP supports establishment of BGP neighbors on BFIR and BFER devices in a BIER domain. The extended TLV information mentioned in embodiments of the present invention is directly transmitted to an edge device in the BIER domain through BGP extension. BIER information is exchanged directed between the BFIR and BFER devices, reducing information storage of intermediate nodes in the BIER domain. The notified format is still the reference format of BIER Info for BGP shown in FIG. 14.

On the basis of the format of BIER TLV for BGP, two new fields may be defined. Alternatively, a new BIER TLV for BGP can be defined. In addition to information carried in BIER TLV in the related art, two new fields are also defined. One is an M field indicating whether to use MPLS-BIER, i.e., whether it is needed to carry BIER MPLS Encapsulation sub-sub-TLV. A case where the M field is set to 1 indicates that MPLS-BIER is used, i.e., carried BIER MPLS Encapsulation sub-sub-TLV is compatible and used. A case where the M field is set to 0 indicates that MPLS-BIER is not used, i.e., BIER MPLS Encapsulation sub-sub-TLV is not carried or used and a BIER header is used for forwarding. Another important field is the BSL Identifier field, which identifies at least one BitStringLength. This field is valid when the M field is 0. When the M field is 1, it is determined, according to a rule, whether this field is valid or the BitStringLength information field carried in BIER MPLS Encapsulation sub-sub-TLV is valid at this time.

### Embodiment 5:

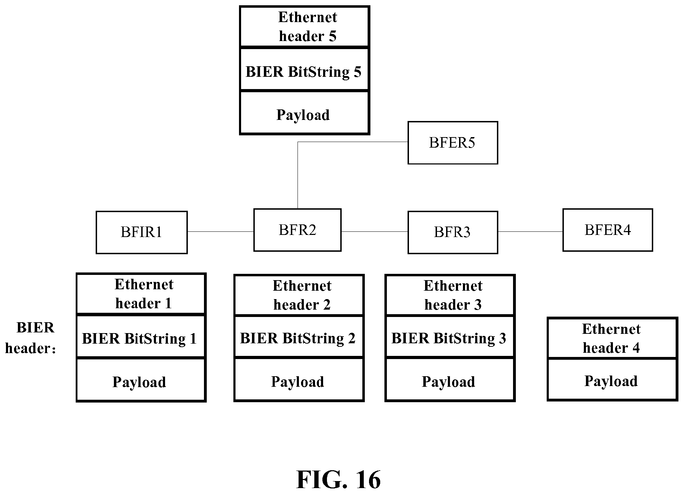

Based on the extension to BIER information on a routing protocol on the basis of this embodiment of the present invention, information carried in an MPLS label in the related art corresponds to information about a triad <sub-domain/BSL/SI>, so when the MPLS label does not participate in forwarding, the information about the triad <sub-domain/BSL/SI> needs to be added to a BIER header defined in FIG. 3. A reference format of a BIER header defined in this embodiment of the present invention is shown in FIG. 15. Referring to FIG. 16, the message forwarding process may include steps 101 to 104 described below.

In step 101, an ingress node BFIR1 receives a multicast message, determines a sub-domain and a Set Identifier to which the multicast message belongs and a used BSL, determines BitString1 corresponding to the multicast message according to a pre-acquired mapping between multicast addresses and BitStrings (where the mapping is designated by the control plane in advance) to determine that the multicast message needs to be forwarded to destination nodes BFER4 and BFER5, encapsulates the BIER header (as shown in FIG. 13) and then forwards the BIER information.

In step 102, after receiving the message, BFR2 searches for the corresponding BIFT according to the sub-domain information, the Set Identifier information in the BIER header and according to BSL information. If it is found that the corresponding next-hop neighbors are BFR3 and BFER5, the message is replicated. A BitString 2 of one message is updated to a BitString 3 and then forwarded to BFR3. A BitString 2 of the other message is updated to a BitString 5 and then forwarded to BFR5.

In step 103, after receiving the message, BFR3 searches for the corresponding BIFT according to the sub-domain information, the Set Identifier information in the BIER header and according to the BSL information. If it is found that the corresponding next-hop neighbor is BFR4, a BitString 3 of the message is updated to a BitString 4 and then forwarded to BFR4. Meanwhile, after receiving the message, BFER5 searches for the corresponding BIFT according to the sub-domain information, the Set Identifier information in the BIER header and according to the BSL information. If a local BFER is found, the BIER header is decapsulated and the message is forwarded to the corresponding receiving device.

In step 104, after receiving the message, BFER4 searches for the corresponding BIFT according to the sub-domain information, the Set Identifier information in the BIER header and according to the BSL information. If a local BFER is found, the BIER header is decapsulated and the message is forwarded to the corresponding receiving device.

A computer-readable storage medium is configured to store computer-executable instructions for executing the above method.

It will be understood by those of ordinary skill in the art that all or part of the steps in the method described above may be implemented by related hardware instructed by one or more programs, and these programs may be stored in a computer-readable storage medium such as a ROM, a magnetic disk, an optical disk or the like. Optionally, all or part of the steps in the embodiments described above may also be implemented using one or more integrated circuits. Each module/unit in the above embodiments may be implemented by hardware or a software function module. Embodiments of the present invention are not limited to any specific combination of hardware and software.

### INDUSTRIAL APPLICABILITY

Embodiments of the present invention provide a method for implementing multicast and a Bit-Forwarding Router, which implement Bit Index Explicit Replication in a non-MPLS network through the BIER technology and thus can reduce support of MPLS control plane and data plane in a BIER domain.

## Claims

1. A method for implementing Bit Index Explicit Replication (BIER), which is applied to a Bit-Forwarding Router in a BIER domain, comprising:
acquiring BIER-related BitStringLength information on a present node;
encapsulating BIER-related information comprising the BitStringLength information in a same type-length-value (TLV) of BIER information; and
notifying of the TLV of the BIER information through a routing protocol.

2. The method of claim 1, wherein
the BitStringLength information comprises at least one BitStringLength.

3. The method of claim 1, wherein
the BIER-related information further comprises Sub-domain Identifier information, Set Identifier information and an identifier of the Bit-Forwarding Router.

4. The method of claim 3, wherein
the BIER-related information further comprises multi-topology identifier information.

5. The method of claim 1, wherein
the TLV of the BIER information further comprises a label identifier, and a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.

6. The method of any one of claims 1 to 5, wherein the routing protocol comprises any one of the following protocols:
Intermediate System-to-Intermediate System, Open Shortest Path First, and Border Gateway Protocol.

7. The method of claim 6, wherein
the routing protocol supports an IPv4 network protocol and/or an IPv6 network protocol.

8. A Bit-Forwarding Router, comprising:
an acquisition module, which is configured to acquire Bit Index Explicit Replication (BIER)-related BitStringLength information on a present node;
an encapsulation module, which is configured to encapsulate BIER-related information comprising the BitStringLength information in a same type-length-value (TLV) of BIER information; and
a notification module, which is configured to notify of the TLV of the BIER information through a routing protocol.

9. The Bit-Forwarding Router of claim 8, wherein
the BitStringLength information acquired by the acquisition module comprises at least one BitStringLength.

10. The Bit-Forwarding Router of claim 8, wherein
the BIER-related information further comprises Sub-domain Identifier information, Set Identifier information and an identifier of the Bit-Forwarding Router.

11. The Bit-Forwarding Router of claim 8, wherein
the TLV of the BIER information encapsulated by the encapsulation module further comprises a label identifier, and a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.

12. A method for implementing Bit Index Explicit Replication (BIER), which is applied to a Bit-Forwarding Router in a BIER domain, comprising:
receiving BIER information, wherein BIER-related information comprising BitStringLength information is encapsulated in a same type-length-value (TLV) of the BIER information; and
processing the BIER information.

13. The method of claim 12, wherein
the BitStringLength information comprises at least one BitStringLength.

14. The method of claim 12, the BIER-related information further comprises:
Sub-domain Identifier information, Set Identifier information, and an identifier of a Bit-Forwarding Router sending the BIER information.

15. The method of claim 14, wherein
the BIER-related information further comprises multi-topology identifier information.

16. The method of claim 12, further comprising:
receiving a Broadcast-Unkown-Multicast (BUM) message, encapsulating the BIER-related information in a BIER header of the BUM message, and forwarding the BUM message according to a BIER forwarding rule.

17. The method of any one of claims 12 to 16, wherein the processing the BIER information comprises:
parsing a label identifier in the TLV of the BIER information, wherein a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.

18. A Bit-Forwarding Router, comprising:
a receiving module, which is configured to receive BIER information, wherein BIER-related information comprising BitStringLength information is encapsulated in a same type-length-value (TLV) of the BIER information; and
a processing module, which is configured to process the BIER information.

19. The Bit-Forwarding Router of claim 18, wherein
the BitStringLength information received by the receiving module comprises at least one BitStringLength.

20. The Bit-Forwarding Router of claim 18, wherein
the BIER-related information received by the receiving module further comprises: Sub-domain Identifier information, Set Identifier information, and an identifier of a Bit-Forwarding Router sending the BIER information.

21. The Bit-Forwarding Router of claim 18, further comprises:
a forwarding module, which is configured to receive a Broadcast-Unkown-Multicast (BUM) message, encapsulate the BIER-related information in a BIER header of the BUM message, and forward the BUM message according to a BIER forwarding rule.

22. The Bit-Forwarding Router of any one of claims 18 to 21, wherein
the processing module processes the BIER information as follows: the processing module parses a label identifier comprised in the TLV of the BIER information, wherein a case where the label identifier is set indicates that a BIER Multi-Protocol Label Switching (MPLS) Encapsulation sub-TLV is compatible and used; and a case where the label identifier is not set indicates that the BIER MPLS Encapsulation sub-TLV is not used.
